# EUROPEAN PATENT SPECIFICATION

(11) **EP 2 163 833 B1**
(45) Date of publication and mention of the grant of the patent: **16.03.2016**
(21) Application number: 09159060.4
(22) Date of filing: 29.04.2009
(51) Int. Cl.: F24F 11/00, F24F 7/007, F04D 25/06, F04D 29/28, H02K 7/14, H02K 11/04, H02K 11/00

(54) **Ventilator and its impeller**
Ventilator und dessen Flügelrad
Ventilateur et sa turbine

(30) Priority: 12.09.2008 US 210149; 08.01.2009 TW 98100434; 08.01.2009 TW 98100435
(43) Date of publication of application: 17.03.2010
(73) Proprietor: Delta Electronics, Inc., Taoyuan County 33341 (TW)
(72) Inventor: Lin, Chih-Hua, 333, Taoyuan Hsien (TW); Chen, Yan-Lin, 333, Taoyuan Hsien (TW); Liu, Te-Chung, 333, Taoyuan Hsien (TW); Hsu, Shih-Tzung, 333, Taoyuan Hsien (TW); Kuo, Pei-Chang, 333, Taoyuan Hsien (TW)
(74) Representative: 2K Patentanwälte Blasberg Kewitz & Reichel

(56) References cited:
- EP-A2- 1 541 933
- WO-A1-2005/073563
- JP-A- 2007 247 919
- US-A1- 2005 254 959

## Description

### BACKGROUND OF THE INVENTION

### Field of Invention

The present invention relates to a fan and in particular to a bathroom ventilator with a soft-start, low noise, power-saving and waterproof functions.

### Related Art

The bathroom is usually equipped with the bathroom ventilator. When the user turns on the switch, the bathroom ventilator starts to generate airflows in the bathroom and thus carry the bad smell or moisture out.

However, the conventional bathroom ventilator does not have the soft-start function. Thus, once the bathroom ventilator is switched on, it will rotate at full speed within a very short time. In this case, the user can obviously hear the noise caused by the bathroom ventilator. If the noise raising rate of the bathroom ventilator reaches about 10 dB per second, the noise will make the user feel uncomfortable.

In addition, to switch on the bathroom ventilator from still state to full speed state requires a very large start-up current. Thus, the inrush current, voltage spike or spike noise may occur in the starting moment when switching on the bathroom ventilator. Moreover, the arc (electric arc phenomenon) may be generated to damage the bathroom ventilator.

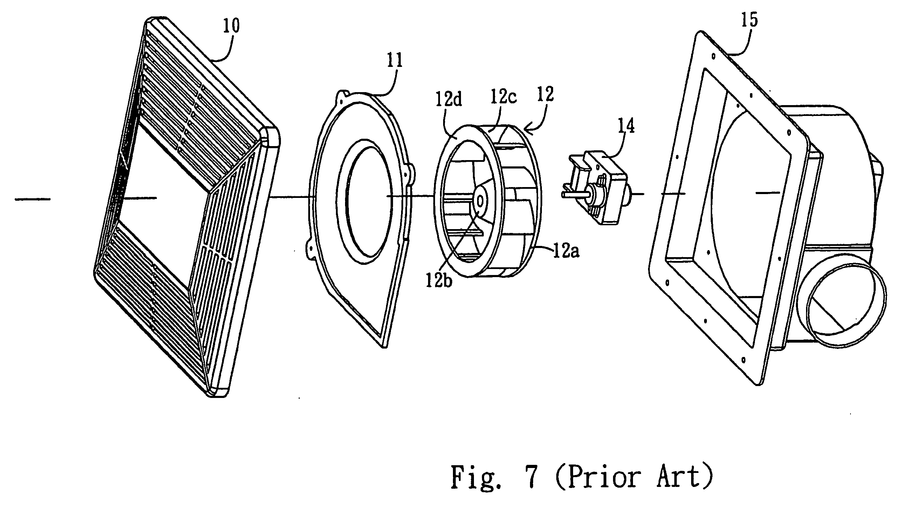

Please refer to Fig. 7 which shows the conventional bathroom ventilator. The conventional bathroom ventilator is composed of a grille 10, a frame 11, an impeller 12, an AC motor 14 and a housing 15. The impeller 12 is driven by the AC motor 14. Because the conventional bathroom ventilator does not have any waterproof mechanism, the motor and its coil will be directly contaminated by dust or water to cause the dangerous voltage so that the product reliability and safety will be greatly reduced. Furthermore, the electric power for driving the conventional bathroom ventilator is usually provided by the utility power system. However, the utility power system provides the AC power supply so that the ventilator using AC motor powered by the AC power supply usually consumes relatively more energy, which leads to larger power consumption.

In addition, the impeller 12 has a base plate 12a, a hub 12b disposed on the base plate 12a, several blades 12c disposed on the base plate 12a, and a ring 12d connecting the top portions of the blades 12c. However, due to the small number of blades, the performance of air intake will be affected and the noise of airflow is loud. The noise mainly comes from the electrical noise of motor, vibration and airflow, wherein the noise of airflow is the major source.

WO 2005/073563 A discloses a ventilator according to the preamble of claim 1, for use in domestic, medical, commercial, industrial and transport appliances. The impeller is disposed on a first side of a cover which serves as an air collector. A housing body, which connects to an air duct, is disposed on a second side of the air collector. The motor driving the impeller is a DC electronically commutated motor. Air passing through the ventilator housing is pushed past internal smooth surfaces to thereby accomplish an air management keeping away dust and contamination away from the electric motor. Electronic circuitry and components for driving the motor are provided on a circuit board located within a cavity that is provided in the lower section of the rear of the air collector. This cavity is, however, not a closed space. Details of the electronic circuitry are not disclosed.

### SUMMARY OF THE INVENTION

In view of the foregoing, it is an object of the present invention to provide a ventilator with the soft-start function that can reduce the noise and prevent the inrush current, voltage spike or spike noise. Further, it is another object of the present invention to effectively keep the major but vulnerable component of the ventilator in a working condition. These objects are achieved by a ventilator according to claim 1. Further advantageous embodiments are the subject-matter of the dependent claims. Thus, the product reliability is increased, the life time of the product is extended and the power consumption is reduced. The ventilator also has low-noise, power-saving and waterproof functions.

To achieve the above object, the present invention discloses a ventilator including a base, a drive device disposed on the base, an impeller coupled to the drive device and driven by the drive device, and a cover assembled with the base to define a closed area between the cover and the base for receiving a first circuit board therein, wherein when an AC power is input to the first circuit board to be converted, a DC power is output to drive the drive device.

The ventilator further includes a housing for receiving the impeller therein, wherein the base is disposed in the housing, and risen toward an inside of the housing to form an accommodation space.

In addition, the ventilator further includes a duct connector assembled with the housing, and a baffle disposed in the duct connector, wherein the baffle is opened by the airflow generated from the impeller when the impeller is driven and rotated by the drive device, and the baffle is closed by gravity when the impeller stops to rotate.

Further, the ventilator further includes an axial tube having an end passing through the base and into the accommodation space, wherein at least one bearing is disposed in the axial tube, and a second circuit board telescoped onto the end of the axial tube and disposed in the accommodation space.

Preferably, the second circuit board is a DC drive circuit board and the first circuit board includes an AC/DC converter. The AC/DC converter includes two diodes to prevent a reverse current, a voltage-drop module for outputting the DC power to the drive device, and a rectification module coupled to the voltage-drop module for receiving the AC power.

The rectification module includes an AC filter and a bridge rectification circuit, the AC filter receives the AC power and filters a low-band frequency portion of the AC power away, and the bridge rectification circuit is coupled to the AC filter and the voltage-drop module for converting the AC power into the DC power to be transmitted to the voltage-drop module.

The voltage-drop module includes a transformer coupled to the rectification module for decreasing the DC power to a work voltage, a switch electrically connected to the transformer for outputting the stabilized work voltage, a coupler coupled to the transformer for retrieving a feedback signal from the transformer and outputting a coupling signal, a controller electrically connected to the switch and the coupler for outputting a control signal to the switch according to the coupling signal, and a DC filter coupled to the transformer and the control device for receiving the stabilized work voltage and filtering a high-band frequency portion of the stabilized work voltage.

The first circuit board further includes a control module electrically connected to the AC/DC converter and the drive device, wherein the control module comprises a converter, a Hall element and a micro control unit (MCU), the converter is coupled to the DC filter for decreasing the work voltage, the decreased work voltage is used as a power for the Hall element and the micro control unit. The micro control unit is coupled to the drive device for generating a soft-start signal to drive and control a rotation speed of the drive device. The Hall element is coupled to the micro control unit for sensing a variation of a magnetic field of the drive device so as to output a feedback signal to the micro control unit, and the micro control unit controls the drive device according to the feedback signal.

Preferably, the first and second circuit boards are integrated in the same circuit board and disposed in the closed area formed between the base and the cover.

The impeller comprises a hub, a base plate coupled to the hub, a first blade set disposed around the hub and on the base plate, and a first annular part disposed at an outer lateral edge of each blade of the first blade set.

Preferably, the impeller further includes a second blade set disposed around the hub, the first and second blade sets are coupled with each other by a second annular part, and the first blade set has a plurality of blades arranged with those of the second blade set in an alternate or symmetrical manner. The base plate is coupled to the hub through an inclined part with an oblique or curved plane.

Preferably, a ratio of a height of the hub to that of the impeller is ranged between 0.3 and 0.55.

Preferably, a ratio of a height of the impeller to a diameter of the impeller is ranged between 0.8 and 0.9.

Preferably, a blade number of the impeller is greater than 60.

To achieve the above object, the present invention discloses a ventilator including a housing, a base disposed in the housing, and an impeller mounted on the base and comprising a hub, wherein a ratio of a height of the hub to that of the impeller is ranged between 0.3 and 0.55.

To achieve the above object, the present invention discloses a ventilator including a housing, a base disposed in the housing, and an impeller mounted on the base, wherein a ratio of a height of the impeller to a diameter of the impeller is ranged between 0.8 and 0.9.

As mentioned above, the ventilator of the present invention drives and controls the rotation speed of the motor according to the soft-start signal so that the rotation speed of the bathroom ventilator can be increased slowly to the target rotation speed. Compared with the prior art, the present invention can reduce the noise and prevent the inrush current, voltage spike or spike noise, thereby increasing the product reliability and extending the life time of the product.

### BRIEF DESCRIPTION OF THE DRAWINGS

The present invention will become more fully understood from the subsequent detailed description and accompanying drawings, which are given by way of illustration only, and thus are not limitative of the present invention, and wherein:
Fig. 1 is a block diagram showing a ventilator with the soft-starting function according to the present invention;
Figs. 2A and 2B are block diagrams showing the ventilator powered by the DC power and the AC power;
Fig. 3 is a circuit diagram of the first circuit board of the ventilator according to the present invention;
Fig. 4A and 4B are schematic diagrams showing the soft-start signal of the ventilator of the present invention;
Figs. 5A and 5B are perspective diagrams respectively showing different types of the impellers of the present invention;
Fig. 6A is an exploded view of the ventilator according to the present invention;
Fig. 6B is a perspective view of the ventilator shown in Fig. 6A after being assembled;
Fig. 6C is a cross-sectional view of the ventilator along the line AA' shown in Fig. 6B; and
Fig. 7 is an exploded view of the conventional bathroom ventilator.

### DETAILED DESCRIPTION OF THE INVENTION

The present invention will be apparent from the following detailed description, which proceeds with reference to the accompanying drawings, wherein the same references relate to the same elements.

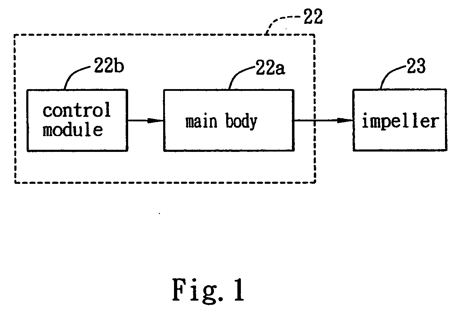

With reference to Fig. 1, a ventilator with the soft-starting function according to an embodiment of the present invention includes an impeller 23 and a motor 22. The motor 22 is coupled to the impeller 23 for driving the impeller 23 to rotate. The motor 22 includes a main body 22a and a controlling module 22b coupled to the motor body 22a. The types of the impeller 23 and motor 22 are not limited to the present embodiment. The impeller 23 includes a hub and a plurality of blades, and the blades are disposed around the hub. The main body 22a of the motor 22 includes a stator and a rotor, and the motor 22 drives the impeller 23 to rotate.

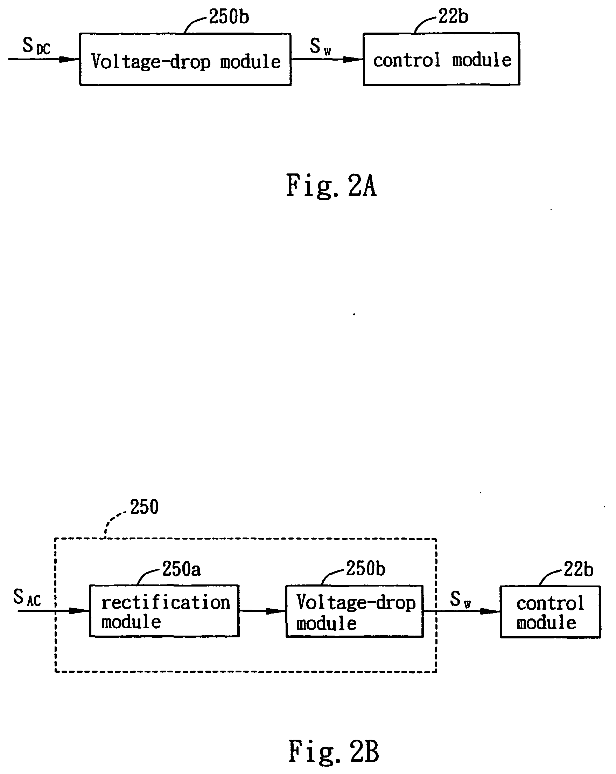

Referring to Figs. 2A and 2B, a power, such as a DC power S_{DC} or an AC power S_{AC}, is provided to apply power to the motor 22. As shown in Fig. 2A, when the power is a DC power S_{DC}, a voltage-drop module 250b is needed to decrease the DC power S_{DC} to the work voltage S_{w} of the motor 22. As shown in Fig. 2B, when the power is an AC power S_{AC}, an AC/DC converter 250 is needed to convert the AC power S_{AC} into a DC power. The AC/DC converter 250 includes a voltage-drop module 250b and a rectification module 250a coupled to the voltage-drop module 250b. The rectification module 250a can convert the input AC power S_{AC} to the DC power S_{DC}. Then, the voltage-drop module 250b decreases the DC power S_{DC} to the work voltage S_{W} of the motor 22 so as to provide the required electric power for switching on the ventilator.

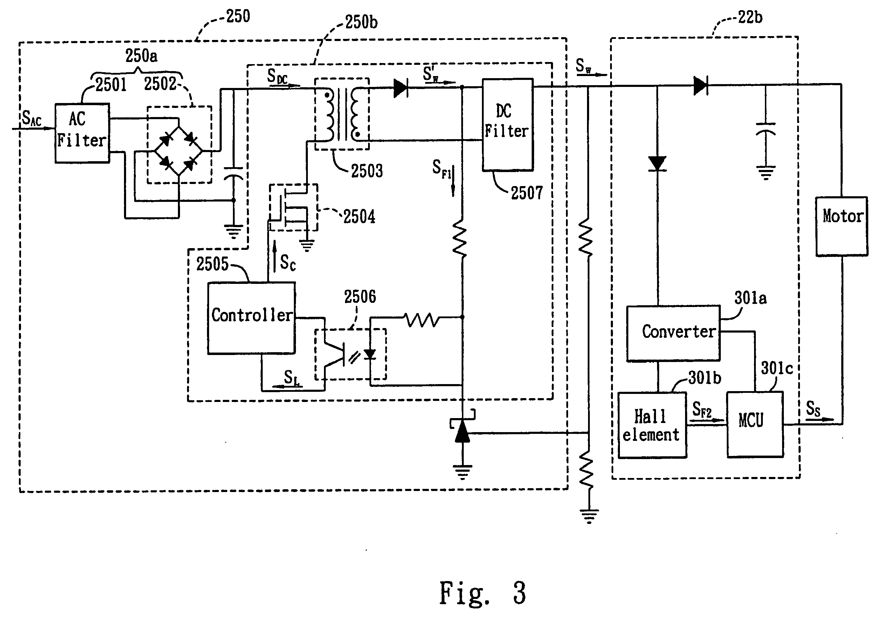

After the ventilator is switched on, the control module 22b generates a soft-start signal S_{S} for driving and controlling the rotation speed of the motor as shown in Fig. 3. Alternatively, the soft-start signal S_{S} can be generated by an external device such as a soft-start circuit, and then the soft-start signal S_{S} is transmitted to the control module 22b.

To make the present invention more comprehensive, the implemental circuits of the AC/DC converter 250 and the control module 22b will be described herein below. With reference to Figs. 2B and 3, the AC/DC converter 250 includes a rectification module 250a including an AC filter 2501 and a bridge rectification circuit 2502. The AC filter 2501 receives the AC power S_{AC} and filters the low-band frequency portion of the AC power S_{AC} away. The bridge rectification circuit 2502, which is coupled to the AC filter 2501 and the voltage-drop module 250b, converts the AC power S_{AC} into the DC power S_{DC}. Then, the DC power S_{DC} is transmitted to the voltage-drop module 250b.

The voltage-drop module 250b includes a transformer 2503, a coupler 2506, a controller 2505, a switch 2504 and a DC filter 2507. The transformer 2503 is coupled to the rectification module 250a and decreases the DC power S_{DC} to the work voltage S'_{w} of the motor. The coupler 2506, which is coupled to the transformer 2503 and the controller 2505, retrieves a feedback signal S_{F1} from the transformer 2503 and outputs a coupling signal S_{L} to the controller 2505. The controller 2505, which is coupled to the coupler 2506 and the switch 2504, outputs a control signal S_{C} to the switch 2504 according to the coupling signal S_{L}. The ON/OFF of the switch 2504 can control the transformer 2503 to output the stabilized work voltage S'_{w}. The DC filter 2507 is coupled to the transformer 2503, the motor and the control module 22b for receiving the work voltage S'_{w}. Then, the DC filter 2507 filters the high-band frequency portion of the work voltage S'_{w} and outputs the work voltage S_{w}, which is the electrical energy for switching on the motor and the control module 22b.

The control module 22b includes a converter 301a, a Hall element 301b and a micro control unit (MCU) 301c. The converter 301a is coupled to the DC filter 2507 for decreasing the work voltage S_{w}. Then, the decreased work voltage S_{w} can be the power for the Hall element 301b and the MCU 301c. The MCU 301c is coupled to the motor and generates a soft-start signal S_{S} for driving and controlling the rotation speed of the motor. When the motor is started, the magnetic field will change depending on the rotation speed. The Hall element 301b is coupled to the MCU 301c and senses the variation of the magnetic field so as to output a feedback signal S_{F2} to the MCU 301c. Then, the MCU 301c controls the motor according to the feedback signal S_{F2}. The MCU 301c outputs a signal S_{S} to control the motor corresponding to the feedback signal S_{F2}. In addition, the implemental circuit of the AC/DC converter 250 shown in Fig. 3 further shows two diodes for preventing the reverse current.

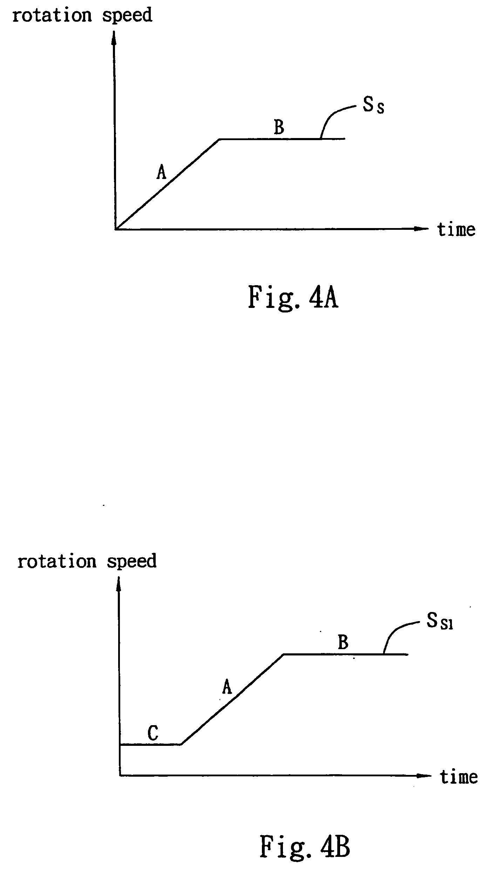

Fig. 4A shows a soft-start signal Ss of the present invention. The soft-start signal S_{S} includes a soft-start section A and a target-driving section B. The control module 22b slowly increases the rotation speed of the motor from the soft-start section A to reach the target-driving section B. The control module 22b can also adjust a slope of the soft-start section A. Accordingly, the rate (or time) for the motor to reach the target-driving second B can be controlled so as to decrease the noise.

The soft-start section A can be connected to the target-driving section B smoothly. Thus, the rotation speed of the motor can be increased slowly so that the inrush current, voltage spike or spike noise caused by the rapidly increased rotation speed can be prevented. The soft-start section A can be a linear curve or a second-degree curve. Therefore, when the ventilator is switched on, the rotation speed of the motor can be increased slowly from zero to the target rotation speed (such as a full speed). In the present invention, the noise raising rate of the ventilator during the soft-start section A is not larger than 2 dB per second.

Fig. 4B shows another soft-start signal S_{S1} of the present invention. The soft-start signal S_{S1} includes a soft-start section A, a target-driving section B and an initial rotation-speed section C. The control module 22b keeps the rotation speed of the motor at an initial rotation speed according to the rotation speed of the initial rotation-speed section C before the rotation speed of the motor is increased. Then, the control module 22b slowly increases the rotation speed of the motor from the soft-start section A to reach the target-driving section B. In this case, the rotation speed can be increased stably and slowly so that the noise can also be decreased.

Alternatively, the ventilator with the soft-start function according to the present invention can be a DC fan. An AC/DC converter 250 is configured to convert the AC power (utility power) into the DC power. Then, the DC power is transmitted to the DC fan for driving the DC fan to rotate. Compared with the AC fan, the DC fan has the advantage of lower power consumption.

Moreover, the ventilator with the soft-start function according to the present invention can be an electrically commutated fan (EC fan), which has an AC/DC converter for converting the AC power (utility power) into the DC power. Then, the DC power drives the EC fan to rotate. In practice, the additional AC/DC converter is not needed for the EC fan so the circuit design can be simplified.

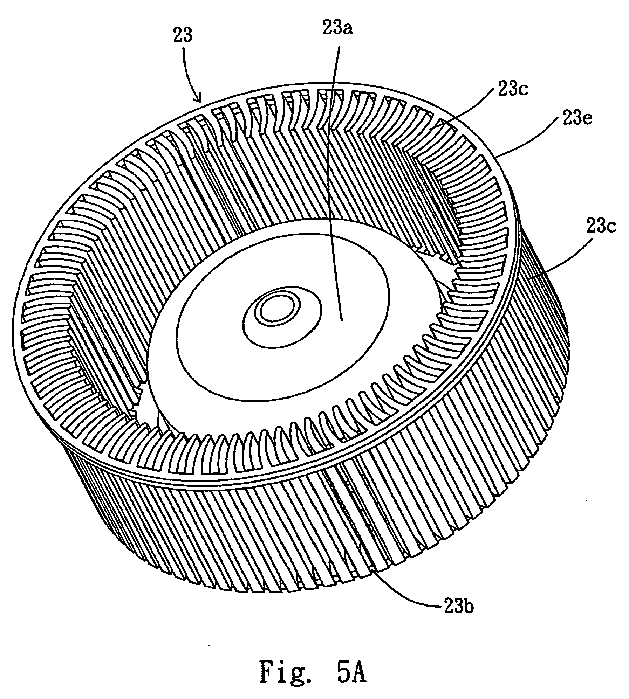

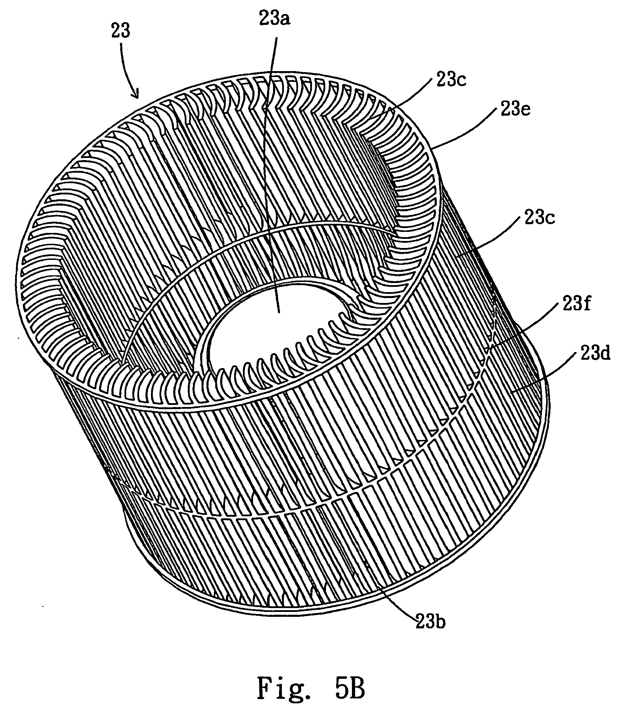

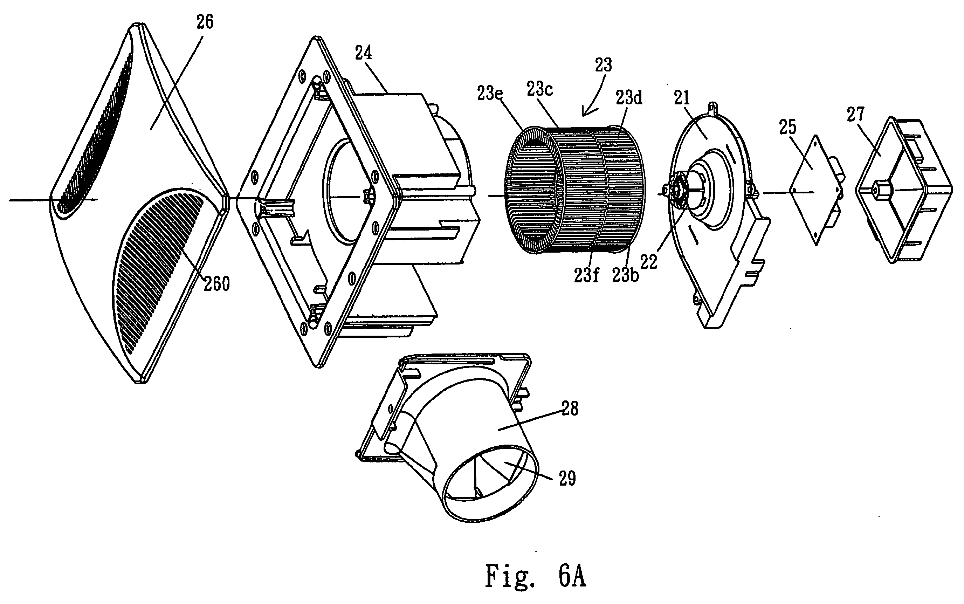

Figs. 5A and 5B shows two types of impellers which can be applied to the ventilator of the present invention shown in Figs. 6A~6C. The impeller 23 shown in Fig. 5A includes a hub 23a having a curved or stepped surface at the periphery of the top thereof, a base plate 23b coupled to the hub 23a, and a first blade set 23c disposed around the hub 23a and on the base plate 23b. There is a first annular part 23e disposed at the outer lateral edge of each blade of the first blade set 23c for connecting each blade.

The impeller shown in Fig. 5A is exemplified by the first blade set 23c, but the impeller 23 shown in Fig. 5B has the first blade set 23c and the second blade set 23d, both of which are disposed around the hub. The first blade set 23c is coupled with the second blade set 23d by a second annular part 23f. The first blade set 23c has a plurality of blades disposed at one side of the second annular part 23f, and the second blade set 23d also has a plurality of blades disposed at the opposite side of the second annular part 23f and alternately or symmetrically arranged with the blades of the first blade set 23c. The height of each blade of the second blade set 23d can be greater than or equal to that of the first blade set 23c.

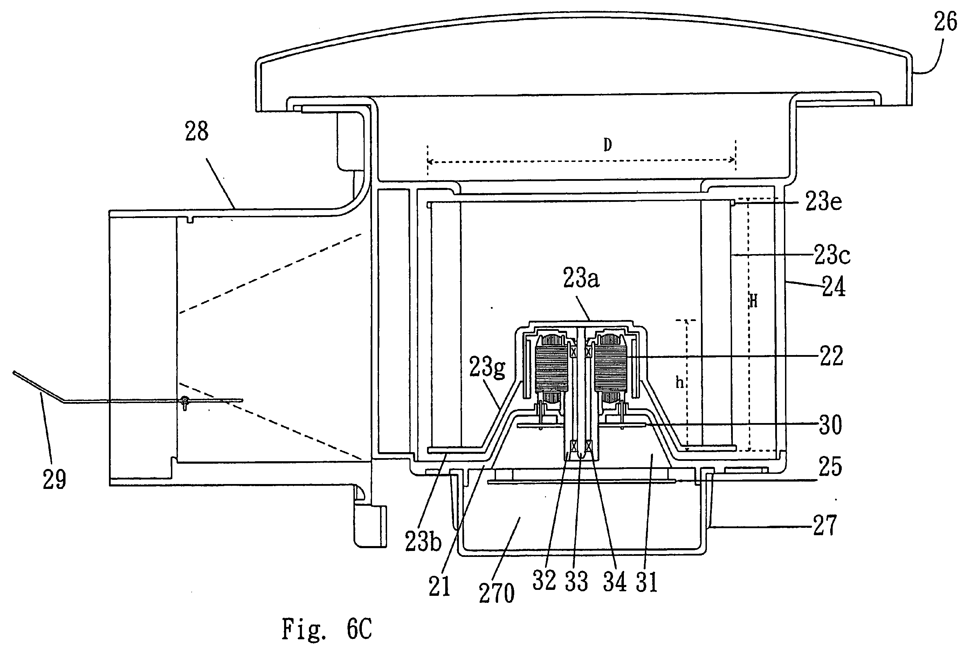

As shown in Fig. 6C, assuming that the impeller has a diameter D and a height H, the ratio of the height H to the diameter D is preferably greater than 0.6, more preferably ranged between 0.8 and 0.9. The blade number of the impeller is preferably greater than 60, more preferably ranged between 80 and 90, for example,, the blade number of the impeller is preferably 86 as shown in Fig. 5A. More preferably, the blade numbers of the first and second blade sets are 83, respectively, as shown in Fig. 5B. The impellers shown in Figs. 5A and 5B can be used in the ventilator shown in Fig. 6C. The ratio of the height h of the hub 231 to the height H of the impeller is preferably ranged between 0.3 and 0.55.

As shown in Figs. 6A~6C, the ventilator includes a base 21, a driving device 22 disposed on the base 21, an impeller 23 coupled to the driving device 22 and driven by the driving device 22, a housing 24 assembled with the base 21 for receiving the impeller 23 therein, a first cover 26 assembled with the housing 24, a second cover 27 assembled with the base 21 to define a closed area for receiving a first circuit board 25 therein, and a duct connector 28 assembled with housing 24 by engaging or screwing.

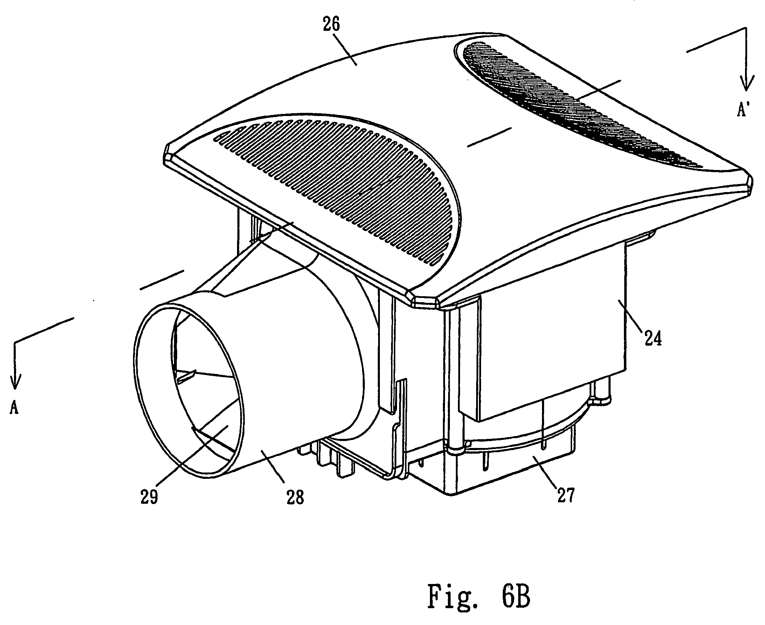

The first cover 26 has a plurality of vents 260 arranged like a rectangular or half-moon profile as shown in Fig 6A or 6B. There is a baffle 29 pivotally mounted in the duct connector 28. When the driving device 22 drives the impeller 23 to rotate, the generated airflow will make the baffle 29 to be at an open position. When the impeller 23 stops rotate, the baffle 29 will be at the close position due to the gravity.

The base 21 is risen toward the inside of the housing 24 to define an accommodation space 31 as shown in Fig. 6C. The ventilator includes an axial tube 32 with one end passing through the base 21 and extending into the accommodation space 31 for enabling a second circuit board 30 to be telescoped thereon and allowing the second circuit board 30 to be disposed within the accommodation space 31. One or more bearing 34 can be disposed in the axial tube 32, and the driving device 22 is mounted within the hub 23a and has a shaft 33 extending into the axial tube 32 to be supported by the bearing 34. The base 21 and the axial tube 32 can be formed together as a single unit by injection molding or can be assembled together after both are individually formed. Additionally, the base plate 23b is coupled to the hub 23a via an inclined part 23g as shown in Fig. 6C. The inclined part 23g has an oblique or curve plane for smoothly guiding the airflow toward the blades of the first or second blade set The inclined part 23g correspond to the risen part of the base 21. The hub 23a, the inclined part 23g, the base plate 23b, the blades 23c, 23d and the first or second annular part 23e, 23f can be formed together as a single unit by injection molding or can be assembled together after they are individually formed. The base 21 and the housing 24 can also be formed together as a single unit by injection molding or can be assembled together after both are individually formed.

Referring to Figs. 6A~6C, the driving device 22 can be a brushless DC motor and the first circuit board 25 can be an AC to DC printed circuit board (PCB) including the AC/DC converter 250 as shown in Figs. 2B and 3. The AC power S_{AC} is input to the ventilator of the present invention and then converted to the DC power S_{DC} to drive the brushless DC motor 22 to rotate.

Referring to Figs. 3 and 6C again, the second circuit board 30 can be a DC drive circuit board including a control module 22b electrically connected to the AC/DC converter 250. The second cover 27 and the base 21 are assembled to define an accommodating space as the closed area for receiving the first circuit board 25 therein to prevent the contamination of moisture and dust. Of course, the first circuit board 25 and the second circuit board 30 can be integrated in the same circuit board and received within the closed area between the second cover 27 and the base 21.

The first cover 26 and the housing 24, the duct connector 28 and the housing 24, the base 21 and the housing 24, and the base 21 and the second cover 27 can be assembled by screwing, engaging, locking or adhering, respectively

To sum up the above-description, the DC drive circuit board for controlling motor and the AC/DC converter 250 are disposed within the closed area formed between the base and the second cover. Thus, such a simplified water-proof structure can attain the functions of accommodating and protecting the circuit board and meet the requirement of safety specification.

In addition, the impeller of the present invention is designed by high depth ratio and dense of blades to greatly enhance the performance of fan and reduce the noise. In the same noise level, the blades are arranged more densely, the airflow pressure and volume will be higher. In the same airflow volume, the dense blades have lower noise.

Finally, the bathroom ventilator of the present invention drives and controls the rotation speed of the motor according to the soft-start signal so that the rotation speed of the bathroom ventilator can be increased slowly to the target rotation speed. Further, the ventilator of the present invention is input by the AC power and outputs a DC power via the conversion by the AC/DC converter. Compared with the prior art, the present invention can reduce the noise and prevent the inrush current, voltage spike or spike noise, thereby increasing the product reliability and extending the life time of the ventilator.

A further embodiment according to the present invention, which can be claimed by separate independent claims and which can be combined with the subject-matter of any of the below dependent claims and/or of the description, can be claimed as follows: A ventilator comprising: a housing; a base assembled with the housing; and an impeller mounted on the base and comprising a hub, wherein a ratio of a height of the hub to that of the impeller is ranged between 0.3 and 0.55.

A further embodiment according to the present invention, which can be claimed by separate independent claims and which can be combined with the subject-matter of any of the below dependent claims and/or of the description, can be claimed as follows: A ventilator comprising: a housing; a base assembled with the housing; and an impeller mounted on the base, wherein a ratio of a height of the impeller to a diameter of the impeller is ranged between 0.8 and 0.9.

## Claims

1. A ventilator comprising:
a base (21);
a drive device (22) disposed on the base (21);
an impeller (23) coupled to the drive device (22) and driven by the drive device (22); and
a cover (27);
said impeller (23) being disposed at a first side of the base (21) and said cover (27) being disposed at a second side of the base (21) opposite to said first side;
**characterised in that** said cover (27) is assembled with the base (21) to define a closed area between the cover (27) and the base (21) for receiving a first circuit board (25) therein, wherein said closed area is shielded by said base (21) against an interior space of said ventilator to prevent the contamination of said closed area with said first circuit board (25) being received therein by moisture and dust, and wherein when an AC power is input to the first circuit board to be converted, a DC power is output to drive the drive device.

2. The ventilator according to claim 1, further comprising a housing (24) for receiving the impeller (23) therein, wherein the base (21) is disposed in the housing (24), and risen toward an inside of the housing (24) to form an accommodation space.

3. The ventilator according to claim 2, further comprising a duct connector (28) assembled with the housing (24), and a baffle (29) disposed in the duct connector (28), wherein the baffle (29) is opened by the airflow generated from the impeller (23) when the impeller (23) is driven and rotated by the drive device (22), and the baffle (29) is closed by gravity when the impeller (23) stops to rotate.

4. The ventilator according to claim 2 or 3, further comprising:
an axial tube (32) having an end passing through the base (21) and extended into the accommodation space (31), wherein at least one bearing is disposed in the axial tube; and
a second circuit board (30) telescoped onto the end of the axial tube and disposed in the accommodation space.

5. The ventilator according to claim 4, wherein the second circuit board (30) is a DC drive circuit board and the first circuit board (25) comprises an AC/DC converter (250).

6. The ventilator according to claim 5, wherein the AC/DC converter comprises two diodes to prevent a reverse current.

7. The ventilator according to claim 5 or 6, wherein the AC/DC converter comprises a voltage-drop module (250b) for outputting the DC power to the drive device (22), and a rectification module (250a) coupled to the voltage-drop module for receiving the AC power.

8. The ventilator according to claim 7, wherein the rectification module (250a) comprises an AC filter (2501) and a bridge rectification circuit (2502), the AC filter receives the AC power and filters a low-band frequency portion of the AC power away, and the bridge rectification circuit is coupled to the AC filter and the voltage-drop module for converting the AC power into the DC power to be transmitted to the voltage-drop module.

9. The ventilator according to claim 7 or 8, wherein the voltage-drop module (250b) comprises:
a transformer (2503) coupled to the rectification module for decreasing the DC power to a work voltage;
a switch (2504) electrically connected to the transformer for outputting the stablized work voltage;
a coupler (2506) coupled to the transformer for retrieving a feedback signal from the transformer and outputting a coupling signal;
a controller (2505) electrically connected to the switch and the coupler for outputting a control signal to the switch according to the coupling signal; and
a DC filter (2507) coupled to the transformer and the control device for receiving the stabilized work voltage and filtering a high-band frequency portion of the stabilized work voltage.

10. The ventilator according to claim 9, wherein the first circuit board (25) further comprises a control module (22b) electrically connected to the AC/DC converter and the drive device (22).

11. The ventilator according to claim 10, wherein the control module (22b) comprises a converter (301a), a Hall element (301b) and a micro control unit (MCU; 301c), the converter is coupled to the DC filter for decreasing the work voltage, the decreased work voltage is used as a power for the Hall element and the micro control unit.

12. The ventilator according to claim 11, wherein the micro control unit is coupled to the drive device (22) for generating a soft-start signal to drive and control a rotation speed of the drive device (22).

13. The ventilator according to claim 12, wherein the Hall element is coupled to the micro control unit for sensing a variation of a magnetic field of the drive device (22) so as to output a feedback signal to the micro control unit, and the micro control unit controls the drive device (22) according to the feedback signal.

14. The ventilator according to any of claims 4 to 13, wherein the first and second circuit boards are integrated in the same circuit board and disposed in the closed area formed between the base (21) and the cover (27).

15. The ventilator according to any of the preceding claims, wherein the impeller (23) comprises:
a hub (23a);
a base plate (23b) coupled to the hub;
a first blade set disposed around the hub and on the base plate; and
a first annular part disposed at an outer lateral edge of each blade of the first blade set

16. The ventilator according to claim 15, wherein the impeller (23) further comprises a second blade set disposed around the hub, the first and second blade sets are coupled with each other by a second annular part, and the first blade set has a plurality of blades arranged with those of the second blade set in an alternate or symmetrical manner.

17. The ventilator according to claim 15 or 16, wherein the base plate is coupled to the hub through an inclined part (23g) with an oblique or curved plane.

18. The ventilator according to any of claims 15 to 17, wherein:
a ratio of a height of the hub to that of the impeller (23) is ranged between 0.3 and 0.55; and/or
a ratio of a height of the impeller (23) to a diameter of the impeller (23) is ranged between 0.8 and 0.9; and/or
a blade number of the impeller (23) is greater than 60.

## Patentansprüche

1. Lüfter, umfassend:
eine Basis (21);
eine Antriebseinrichtung (22), die auf der Basis (21) angeordnet ist;
ein Flügelrad (23), das mit der Antriebseinrichtung (22) gekoppelt ist und durch die Antriebseinrichtung (22) angetrieben wird; und
eine Abdeckung (27);
wobei das Flügelrad (23) auf einer ersten Seite der Basis (21) angeordnet ist und die Abdeckung (27) auf einer zweiten Seite der Basis, gegenüberliegend der ersten Seite, angeordnet ist;
**dadurch gekennzeichnet, dass** die Abdeckung (27) mit der Basis (21) zusammengesetzt ist, um einen geschlossenen Bereich zwischen der Abdeckung (27) und der Basis (21) zur Aufnahme einer ersten Leiterplatte (25) darin festzulegen, wobei der geschlossene Bereich abgeschirmt durch die Basis (21) gegen einen Innenraum des Flügelrads abgeschirmt ist, um die Verunreinigung des geschlossenen Bereichs mit der darin aufgenommenen ersten Leiterplatte (25) durch Feuchtigkeit und Staub zu verhindern, und wobei, wenn der ersten Leiterplatte eine Wechselspannung eingegeben wird, um umgewandelt zu werden, eine Gleichspannung ausgegeben wird, um die Antriebseinrichtung anzutreiben.

2. Lüfter nach Anspruch 1, weiterhin umfassend ein Gehäuse (24) zur Aufnahme des Flügelrads (23) darin, wobei die Basis (21) in dem Gehäuse (24) angeordnet ist und zu einer Innenseite des Gehäuses (24) hin erhöht ist, um einen Aufnahmeraum auszubilden.

3. Lüfter nach Anspruch 2, weiterhin umfassend einen Kanalverbinder (28), der in das Gehäuse (24) eingebaut ist, und eine Ablenkplatte (29), die in dem in dem Kanalverbinder (28) angeordnet ist, wobei die Ablenkplatte (29) durch den von dem Flügelrad (23) erzeugten Luftstrom geöffnet wird, wenn das Flügelrad (23) durch die Antriebseinrichtung (22) angetrieben und gedreht wird, und wobei die Ablenkplatte (29) durch die Schwerkraft geschlossen wird, wenn das Flügelrad (23) aufhört sich zu drehen.

4. Lüfter nach Anspruch 2 oder 3, weiterhin umfassend:
ein axiales Rohr (32) mit einem Ende, das sich durch die Basis (21) und in den Aufnahmeraum (31) hinein erstreckt, wobei zumindest ein Lager in dem axialen Rohr angeordnet ist; und
eine zweite Leiterplatte (30), die auf das Ende des axialen Rohres teleskopartig aufgeschoben und in dem Aufnahmeraum angeordnet ist.

5. Lüfter nach Anspruch 4, wobei die zweite Leiterplatte (30) eine Gleichstrom-Antriebsleiterplatte ist und die erste Leiterplatte (25) einen Gleichstrom/Wechselstrom-Wandler (250) umfasst.

6. Lüfter nach Anspruch 5, wobei der Gleichstrom/Wechselstrom-Wandler zwei Dioden aufweist, die einen entgegen gerichteten Strom verhindern.

7. Lüfter nach Anspruch 5 oder 6, wobei der Gleichstrom/Wechselstrom-Wandler ein Spannungsabfall-Modul (250b) zum Ausgeben der Gleichspannung an die Antriebseinrichtung (22) und ein Gleichrichtermodul (250a) aufweist, das mit dem Spannungsabfall-Modul verbunden ist, um die Wechselspannung zu erhalten.

8. Lüfter nach Anspruch 7, wobei das Gleichrichtermodul (250a) einen Wechselstromfilter (2501) und eine Brückengleichrichterschaltung (2502) aufweist, der Wechselstromfilter die Wechselspannung erhält und einen Tiefband-Frequenzanteil der Wechselspannung herausfiltert, und die Brückengleichrichterschaltung mit dem Wechselstromfilter und dem Spannungsabfall-Modul verbunden ist, um die Wechselspannung in die Gleichspannung zur Weiterleitung an das Spannungsabfall-Modul zu wandeln.

9. Lüfter nach Anspruch 7 oder 8, wobei das Spannungsabfall-Modul (250b) umfasst:
einen Transformator (2503), der mit dem Gleichrichtermodul zum Verringern der Gleichspannung in eine Arbeitsspannung verbunden ist;
einen Schalter (2504), der elektrisch mit dem Transformator zum Ausgeben der stabilisierten Arbeitsspannung verbunden ist;
einen Koppler (2506), der mit dem Transformator zum Wiedergewinnen eines Rückkopplungssignals Von dem Transformator und zum Ausgeben eines Kopplungssignals verbunden ist;
eine Steuereinrichtung (2505), die elektrisch mit dem Schalter und dem Koppler zum Ausgeben eines Steuersignals an den Schalter entsprechend dem Kopplungssignal verbunden ist; und
einen Gleichstrom-Filter (2507), der mit dem Transformator und der Steuereinrichtung zum Empfangen der stabilisierten Arbeitsspannung und zum Filtern eines Hochband-Frequenzanteils der stabilisierten Arbeitsspannung verbunden ist.

10. Lüfter nach Anspruch 9, wobei die erste Leiterplatte (25) weiterhin ein Steuerungsmodul (22b) aufweist, das elektrisch mit dem Gleichstrom/Wechselstrom-Wandler und der Antriebseinrichtung (22) verbunden ist.

11. Lüfter nach Anspruch 10, wobei das Steuerungsmodul (22b) einen Wandler (301a), ein Hall-Element (301b) und eine Mikrosteuereinheit (MCU; 301c) umfasst, wobei der Wandler mit dem Gleichstrom-Filter zum Verringern der Arbeitsspannung verbunden ist, wobei die verringerte Arbeitsspannung als Spannung für das Hall-Element und die Mikrosteuereinheit verwendet wird.

12. Lüfter nach Anspruch 11, wobei die Mikrosteuereinheit mit der Antriebseinrichtung (22) zum Erzeugen eines Soft-Start-Signals zum Antreiben und Steuern einer Drehgeschwindigkeit der Antriebseinrichtung (22) verbunden ist.

13. Lüfter nach Anspruch 12, wobei das Hall-Element mit der Mikrosteuereinheit zum Erfassen einer Änderung eines magnetischen Feldes der Antriebseinrichtung (22) verbunden ist, um ein Rückkopplungssignal an die Mikrosteuereinheit auszugeben, und wobei die Mikrosteuereinheit die Antriebseinrichtung (22) entsprechend dem Feedbacksignal steuert.

14. Lüfter nach einem der Ansprüche 4 bis 13, wobei die erste und zweite Leiterplatte in die gleiche Leiterplatte integriert sind und in dem geschlossenen Bereich angeordnet ist, der zwischen der Basis (21) und der Abdeckung (27) ausgebildet ist.

15. Lüfter nach einem der vorhergehenden Ansprüche, wobei das Flügelrad (23) umfasst:
eine Nabe (23a);
eine Grundplatte (23b), die mit der Nabe verbunden ist;
eine erste Flügelgruppe, die um die Nabe herum und auf der Grundplatte angeordnet ist; und
ein erstes Ringteil, das auf einem äußeren Seitenrand jedes Flügels der ersten Flügelgruppe angeordnet ist.

16. Lüfter nach Anspruch 15, wobei das Flügelrad (23) weiterhin eine zweite Flügelgruppe umfasst, die um die Nabe herum angeordnet ist, wobei die erste und zweite Flügelgruppe miteinander über ein zweites Ringteil verbunden ist, und wobei die erste Flügelgruppe eine Mehrzahl von Flügeln aufweist, die gemeinsam mit denen der zweiten Flügelgruppe alternierend oder symmetrisch angeordnet sind.

17. Lüfter nach Anspruch 15 oder Anspruch 16, wobei die Grundplatte mit der Nabe über einen geneigten Abschnitt (23g) mit einer schrägen oder gekrümmten Ebene verbunden ist.

18. Lüfter nach einem der Ansprüche 15 bis 17, wobei:
das Verhältnis der Höhe der Nabe zu der des Flügelrads (23) im Bereich zwischen 0,3 und 0,55 liegt; und/oder
das Verhältnis der Höhe des Flügelrades (23) zum Durchmesser des Flügelrads (23) im Bereich zwischen 0,8 und 0,9 liegt; und/oder
die Anzahl der Flügel des Flügelrads (23) größer als 60 ist.

## Revendications

1. Un ventilateur comprenant :
une base (21);
un dispositif d'entraînement (22) disposé sur la base (21);
une turbine (23) couplée au dispositif d'entraînement (22) et entraîné par le dispositif d'entraînement (22); et
un couvercle (27) ;
ladite turbine (23) étant disposée à un premier côté de la base (21) et le dit couvercle (27) étant disposé à un second côté de la base (21) à l'opposée du premier côté ;
**caractérisé en ce que** ledit couvercle (27) est assemblé à la base (21) pour définir une zone fermée entre le couvercle (27) et la base (21) pour y recevoir un premier circuit imprimé (25), dans lequel ladite zone fermée est blindée par ladite base (21) vis-à-vis d'un espace intérieur dudit ventilateur pour empêcher la contamination par la moisissure et par la poussière de ladite zone fermée avec le circuit imprimé (25) y contenu, et dans lequel lorsqu'une alimentation électrique AC est appliquée au premier circuit imprimé pour y être convertie, une alimentation continue DC est générée pour entraîner le dispositif d'entraînement.

2. Le ventilateur selon la revendication 1, comprenant en outre un boîtier (24) pour y recevoir la turbine (23), dans lequel la base (21) est disposée dans le boîtier (24), et élevée vers l'intérieur du boîtier afin de délimiter un espace de logement.

3. Le ventilateur selon la revendication 2, comprenant en outre un raccord de conduit (28) assemblé avec le boîtier (24), et un déflecteur (29) disposé dans le raccord de conduit (28), dans lequel le déflecteur (29) est ouvert par le flux d'air généré par la turbine (23) lorsque la turbine (23) est entraînée en rotation par le dispositif d'entraînement (22), et le déflecteur (29) est fermé par gravité lorsque la turbine cesse de tourner.

4. Le ventilateur selon la revendication 2 ou 3, comprenant en outre:
un tube axial (32) ayant une extrémité en passant au travers la base (21) et s'étendant au sein de l'espace de logement (31), dans lequel au moins un palier est disposé dans le tube axial; et
un second circuit imprimé (30) télescopique sur l'extrémité du tube axial et disposé au sein de l'espace de logement.

5. Le ventilateur selon la revendication 4, dans lequel le second circuit imprimé (30) est un circuit imprimé d'entraînement DC et le premier circuit imprimé (25) comporte un convertisseur AC/DC (250).

6. Le ventilateur selon la revendication 5, dans lequel le convertisseur AC/DC comporte deux diodes pour prévenir le passage d'un courant inverse.

7. Le ventilateur selon la revendication 5 ou 6, dans lequel le convertisseur AC/DE comporte un module de chute de tension (250b) pour délivrer en sortie l'énergie DC pour le dispositif d'entraînement (22), et un module de redressement (250)a) couplé au module de chute de tension pour recevoir l'énergie AC.

8. Le ventilateur selon la revendication 7, dans lequel le module de redressement (250a) comprend un filtre AC (2501) et un pont redresseur (2502), le filtre AC recevant l'énergie AC et filtrant une bande basse fréquence de l'énergie AC, et le pont redresseur étant couplé au filtre AC et le module de chute de tension pour convertir l'énergie AC en une énergie DC devant être transmise au module de chute de tension.

9. Le ventilateur selon la revendication 7 ou 8, dans lequel le module de chute de tension (250b) comprend:
un transformateur (2503) couplé au module redresseur pour diminuer l'énergie DC à une tension de travail ;
un commutateur (2504) connecté électriquement au transformateur pour délivrer une tension de travail stabilisée ;
un coupleur (2506) couplé au transformateur pour extraire un signal de rétroaction provenant du transformateur et générer en sortie un signal de couplage;
un dispositif de commande (2505) connecté électriquement au commutateur et au coupleur pour fournir en sortie un signal de commande pour le commutateur en fonction du signal de couplage; et
un filtre DC (2507) couplé au transformateur et le dispositif de commande pour recevoir la tension de travail stabilisée et pour filtrer une bande de haute-fréquence de la tension de travail stabilisée.

10. Le ventilateur selon la revendication 9, dans lequel le premier circuit imprimé (25) comporte en outre un module de commande (22b) connecté électriquement au convertisseur AC/DC et au dispositif d'entraînement (22).

11. Le ventilateur selon la revendication 10, dans lequel le module de commande (22b) comprend un convertisseur (301 a), un élément à effet Hall (301b) et un micro-contrôleur (MCU; 301c), le convertisseur étant couplé au filtré DC pour diminuer la tension de travail, la tension de travail diminuée étant utilisée pour alimenter l'élément à effet Hall ainsi que le micro-contrôleur.

12. Le ventilateur selon la revendication 11, dans lequel le micro-contrôleur est couplé au dispositif d'entraînement (22) pour générer un signal de démarrage lent pour entraîner et commander une vitesse de rotation du dispositif d'entraînement.

13. Le ventilateur selon la revendication 12, dans lequel l'élément à effet Hall est couplé au micro-contrôleur pour détecter une variation d'un champ magnétique du dispositif d'entraînement (22) de manière à générer en sortie un signal de rétroaction pour le micro-contrôleur, le micro-contrôleur pilotant le dispositif d'entraînement (22) selon la le signal de rétroaction.

14. Le ventilateur selon l'une quelconque des revendications 4 à 13, dans lequel les premier et second circuit imprimés sont intégrés au sein d'un même circuit imprimé et disposé dans la zone fermée formée entre la base (21) et le couvercle (27).

15. Le ventilateur selon l'une quelconque des revendications précédentes, dans lequel le rotor comprend:
un moyeu (23a);
une plaque de base (23b) couplé au moyeu;
un premier jeu de lames disposé autour du moyeu et sur la plaque de base; et
une première partie annulaire disposée au niveau d'un bord latéral extérieur de chaque lame de la première série de lames.

16. Le ventilateur selon la revendication 15, dans lequel la turbine (23) comprend en outre un second ensemble de pales disposées autour du moyeu, les premier et deuxième ensembles de pales étant couplés l'un à l'autre par une deuxième partie annulaire, et le premier ensemble de pales comportant une pluralité de pales disposées avec celles du second ensemble de pales suivant une manière alternative ou symétrique.

17. Le ventilateur selon la revendication 15 ou 16, dans lequel la plaque de base est couplée au moyeu via une partie inclinée (23g) avec un plan oblique ou courbe.

18. Le ventilateur selon l'une quelconque des revendications 15 à 17, dans lequel:
un rapport de hauteur du moyeu à celle de la turbine (23) compris entre 0,3 et 0,55; et/ou
un rapport de hauteur de la turbine (23) au diamètre de la turbine (23) compris entre 0,8 et 0,9; et/ou
un nombre de pales de la turbine (23) supérieur à 60.
